# DEMANDE DE BREVET EUROPEEN

(11) **EP 0 561 667 A1**
(43) Date de publication de la demande: **22.09.1993**
(21) Numéro de dépôt: 93400586.9
(22) Date de dépôt: 05.03.1993
(51) Int. Cl.: C21D 9/60, C21D 9/56, C21D 11/00

(54) **Procédé de traitement thermique de bandes métalliques**

(30) Priorité: 19.03.1992 FR 9203311
(71) Demandeur: STEIN HEURTEY, F-91130 Ris Orangis (FR)
(72) Inventeur: Boyer, Michel Emile Marcel, F-77590 Bois le Roi (FR)
(74) Mandataire: Armengaud Ainé, Alain

(57) **Abrégé**

Procédé de traitement thermique de bandes métalliques en continu, caractérisé en ce que la bande devant subir le traitement thermique, chemine au travers d'un four, isolé thermiquement et dans une atmosphère protectrice, constitué de sections de chauffage (1), de maintien (2), de refroidissement (3) ; ladite bande est guidée par une pluralité de rouleaux de renvoi (6, 6', 6'', 7, 7', 7'') situés dans les parties supérieures et inférieures desdites sections et conforme ainsi une pluralité de brins, et passent devant des moyens de refroidissement et de chauffage traditionnel, (généralement réalisé par une source de rayonnement ou à l'aide de flammes nues), et à induction (14), ces derniers sont, soit placés en amont, soit en aval, d'au moins une section de chauffage traditionnel (1), soit disposés de manière à diviser au moins une section de chauffage traditionnel en parties (1, 1') et sont utilisés de façon combinées et/ou simultanées avec les autres moyens de chauffage afin de compenser les variations des paramètres de traitement thermique.

## Description

La présente invention est relative à un procédé de traitement thermique de bandes métalliques. Elle concerne plus particulièrement les industries fortement consommatrices de tôles, où le meilleur moyen de réaliser des économies est de réduire la masse, donc l'épaisseur des tôles, tout en conservant d'excellentes propriétés mécaniques. L'opération de recuit continu répond parfaitement à ces espérances.

L'invention s'intéresse à la technologie des fours de recuit de bande en continu. De tels fours sont utilisés dans des lignes de recuit en continu ou des lignes de galvanisation en continu, cependant l'invention peut s'appliquer à d'autres types d'installations où les bandes sont traitées en continu, notamment dans les installations, de vernissage, de revêtement, de peinture.

Le procédé s'articule autour d'un ou plusieurs fours de recuit de bandes, et sont constitués de plusieurs sections équipées pour réaliser consécutivement les différentes phases du cycle du traitement thermique qui sont, dans le cas le plus simple : chauffage, maintien, refroidissement.

A la fin de chacune des phases, la température atteinte par le produit est déterminée et doit être stabilisée afin d'obtenir les caractéristiques métallurgiques requises. En particulier, la température de fin de chauffage est très précise.

L'opération est aisée et couramment exécutée lorsque le four fonctionne en régime établi, il traite un produit de dimensions données à une vitesse constante et en correspondance d'une courbe de traitement thermique établie.

Les fours industriels connus travaillent quotidiennement des bandes d'épaisseur et de largeur différentes selon des cycles de recuit également variables.

Fatalement, il en résulte des périodes transitoires pendant lesquelles la température de recuit est difficilement atteinte et maîtrisable dans les chambres de chauffage actuelles. Ces dernières utilisent généralement des sources traditionnelles à rayonnement ou à flamme nue, toutes les deux caractérisées par leur inertie thermique importante.

Les utilisateurs ont introduit des mesures qui permettent de réduire la durée et l'amplitude des variations de température de recuit au cours des périodes transitoires de changement de format de bandes.

L'aide d'ordinateurs, asservis à la conduite de ces procédés qui suivent en temps réel l'état thermique du four et pilotent l'évolution des paramètres de chauffage et de la vitesse de traitement, a permis de solutionner partiellement les problèmes.

En effet, ces modes de conduite introduisent des variations de vitesse de traitement dans la phase essentielle de chauffage qui se répercutent sur le fonctionnement et les performances des autres parties du four ou de l'installation telles que notamment la section de refroidissement ou la section de revêtement d'une ligne de galvanisation.

La présente invention se propose donc d'améliorer les sources de chauffage traditionnel par l'utilisation du chauffage par induction électromagnétique pour le traitement de bandes métalliques en continu. En effet, le chauffage par induction peut être utilisé dans deux familles d'application :
- Les unes, à température peu élevée (de 100 à 300°C), concernent le séchage, le vernissage.
- Les autres, comme notamment le recuit, relèvent de températures supérieures.

Pour les tôles minces, le four traditionnel à rayonnement peut sembler plus séduisant du fait de son investissement moindre, mais l'induction présente plusieurs avantages incomparables et se prête particulièrement bien aux traitements thermiques de surface des métaux. On note comme propriétés avantageuses :
- Possibilité de puissance volumique plus élevée que pour tout autre procédé,
- Consommation sensiblement constante quelle que soit la largeur de la bande à traiter et sans changement d'inducteur,
- Facilité de transmission de l'énergie sans contact et sans influence sur l'état de surface du produit à chauffer,
- Meilleures précisions et stabilité du chauffage,
- Aucune difficulté pour assurer un traitement sous atmosphère contrôlée,
- Encombrement réduit,
- Démarrage et arrêt du dispositif d'induction pratiquement instantanés, ce qui évite tout déchet aux arrêts et aux changements de format de tôles,
- Possibilité d'asservissement de la puissance énergétique à la vitesse ou à la température avec constante de temps très faible,
- Automatisation élevée.

L'invention a pour objet un procédé de traitement thermique caractérisé, en ce que la bande devant subir le traitement thermique, chemine au travers d'un four, isolé thermiquement et dans une atmosphère protectrice, constitué de sections de chauffage, de maintien, de refroidissement ; ladite bande est guidée par une pluralité de rouleaux de renvoi situés dans les parties supérieures et inférieures desdites sections et conforme ainsi une pluralité de brins, et passe devant des moyens de refroidissement et de chauffage traditionnel, (généralement réalisé par une source de rayonnement ou à l'aide de flammes nues) et à induction, ces derniers sont, soit placés en amont, soit en aval, d'au moins une section de chauffage traditionnel, soit disposés de manière à diviser au moins une section de chauffage traditionnel en parties et sont utilisés de façon combinée et/ou simultanée avec les autres moyens de chauffage afin de compenser les variations des paramètres de traitement thermique.

D'autres caractéristiques et avantages de la présente invention ressortiront de la description faite ci-après, en référence aux dessins annexés qui en illustrent un exemple de réalisation dépourvu de tout caractère limitatif. Sur les figures :

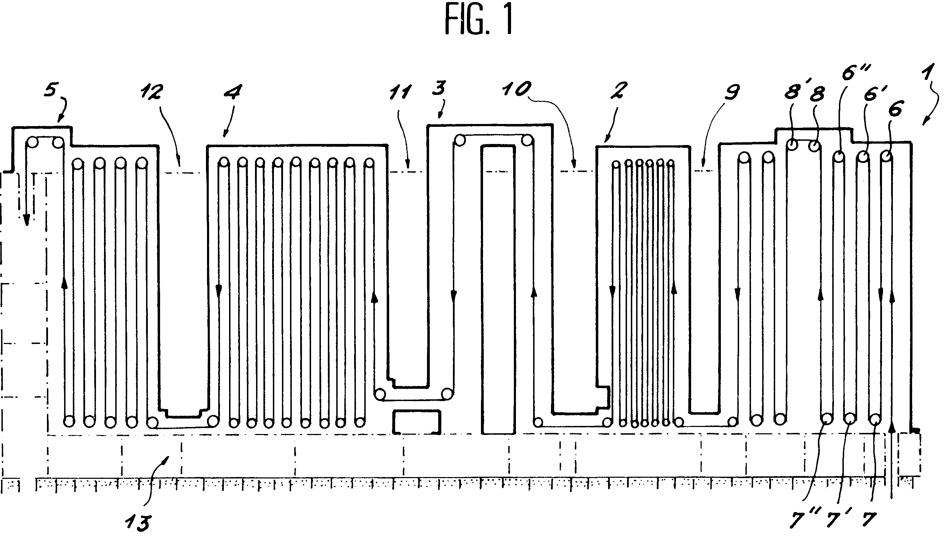

- la figure 1 est une vue plane en coupe d'un four mettant en oeuvre le procédé de recuit continu de bande de tôle,
- la figure 2 est une vue plane à échelle plus grande d'une section de chauffage traditionnel munie, en amont d'un dispositif de chauffage par induction,
- la figure 3 est une vue plane à échelle plus grande d'une section de chauffage traditionnel munie à l'intérieur d'un dispositif de chauffage à induction qui divise la section en parties.
- la figure 4 est un diagramme d'évolution de l'apport calorifique en fonction du temps entre deux états stables pour un mode fonctionnement positif,
- la figure 5 est un diagramme d'évolution de la vitesse de défilement de la bande en fonction du temps entre deux états stables pour un mode fonctionnement positif,
- la figure 6 est un diagramme d'évolution de l'apport calorifique en fonction du temps entre deux états stables pour un mode fonctionnement négatif,
- la figure 7 est un diagramme d'évolution de la vitesse de défilement de la bande en fonction du temps entre deux états stables pour un mode fonctionnement négatif,

Selon un mode préféré de mise en oeuvre de ce procédé, la bande à traiter chemine à l'intérieur d'un four vertical ou horizontal de recuit continu.

Ce four est généralement composé de sections de chauffage 1, de maintien 2 et de refroidissement 3. Leur nombre et leur disposition sont très divers, il peut coexister entre les diverses sections de refroidissement, des sections de maintien 2, 4 pour l'établissement correct des transformations cristallographiques.

La bande circule donc au travers des différentes sections du four, dans le cadre d'un four vertical, elle est guidée par une pluralité de rouleaux fixes 6, 6', 6", 7, 7', 7" entrainés en rotation, situés aux extrémités supérieures et inférieures des volumes ou chambres conformant les enceintes de traitement.

La bande s'étire en boucle entre deux rouleaux haut 6 et bas 7 de renvoi. On dispose entre les brins de la bande ou en regard des parois extérieures les moyens de chauffage conventionnels ou à induction 14 ainsi que des organes de refroidissement.

Les moyens de chauffage conventionnels sont principalement constitués d'éléments chauffants, de forme tubulaire, à l'intérieur desquels on entretient la combustion d'un combustible liquide ou gazeux. Ces éléments appelés tubes radiants sont placés entre les brins de la bande et face aux parois frontales du four et chauffent la bande par rayonnement. Ils assurent la majeure partie de l'apport énergétique et ils interviennent lors de la marche en régime établi de l'installation.

On comprend aisément que toutes les enceintes sont isolées thermiquement de l'environnement 9, 10, 11, 12, 13 par un calorifugeage approprié. Chacune des enceintes est munie d'organes de centrage de l'axe de la bande dans l'axe de la ligne, ils sont constitués par des rouleaux similaires 8, 8' aux rouleaux de guidage et sont montés mobiles à l'intérieur de supports afin d'ajuster la longueur développée entre deux points fixes 6', 7' de guidage, ils peuvent si besoin se substituer aux rouleaux de guidage et sont présents dans les sections de chauffage 1, de maintien 2, 4 en température et de refroidissement 3, 5.

Les moyens de refroidissement sont généralement réalisés par des dispositifs de soufflage de gaz de protection recyclé et refroidi dans des échangeurs extérieurs à l'installation. Ce soufflage, de vitesse variable en fonction des besoins d'échange thermique, s'effectue selon une direction perpendiculaire au trajet de la bande et au travers d'une pluralité d'orifices ou de fentes disposées sur les moyens de soufflage.

Les différentes chambres sont reliées entre elles par des tunnels de liaison, le tout étant éventuellement maintenu sous une atmosphère protectrice neutre constituée notamment d'azote et d'hydrogène.

Le mode de cheminement d'une bande est le suivant :

La bande pénètre dans une première enceinte de chauffage 1 qui comprend outre des sources de chauffage traditionnelles, un dispositif d'induction 14 placé au départ du trajet de la bande. Dans cette portion, la bande subit une élévation de température jusqu'à sa température de recuit correspondante au traitement thermique désiré, puis elle passe dans une chambre de maintien 2 dans laquelle l'apport énergétique est maintenu constant pour l'établissement des transformations cristallographiques. Sa température est abaissée par les moyens explicités précédemment dans une enceinte dite de refroidissement 3, la température décroît rapidement, l'évolution des transformations cristallographiques est stoppée.

Elle traverse, ensuite, une chambre destinée au vieillissement appelé communément "overaging" 4, cette chambre est conçue de manière similaire à l'enceinte de maintien et elle se situe entre deux chambres de refroidissement.

Le dernier refroidissement 5 n'est généralement pas réalisé comme le précédent par un échange gaz-solide mais par un échange liquide-solide, beaucoup plus efficace, on procède par aspersion de liquide sur la bande en défilement.

Le produit fini est enroulé ou débité en sortie de l'installation.

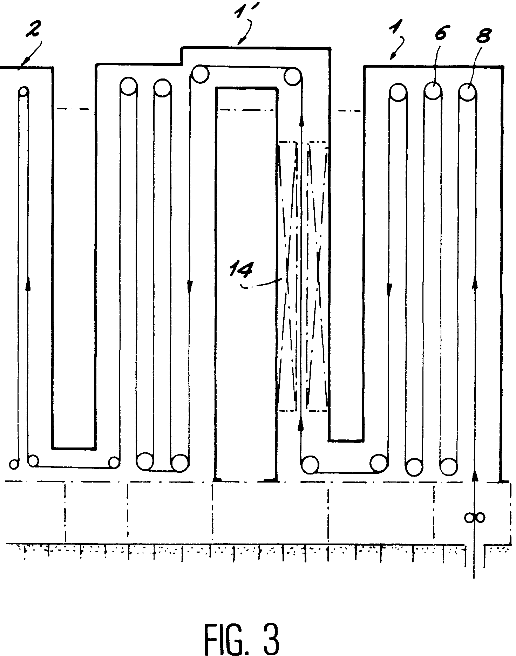

Selon un autre mode de mise en oeuvre du procédé, on divise l'enceinte de chauffage en plusieurs parties 1, 1' (cf. figure 3), le dispositif d'induction 14 n'est plus placé en amont de l'installation mais entre les chambres de chauffage, notamment en aval.

Les effets de ces dispositifs d'induction sont selon les besoins couplés ou découplés des autres sources de chaleur traditionnelles, mais en tout état de cause, ils sont destinés à fonctionner durant les périodes transitoires du traitement.

Le régime de marche de l'installation, en transitoire, comprend principalement deux modes, l'un dit positif, l'autre dit négatif, qui se caractérisent chacun par des évènements prévisibles et imprévisibles.

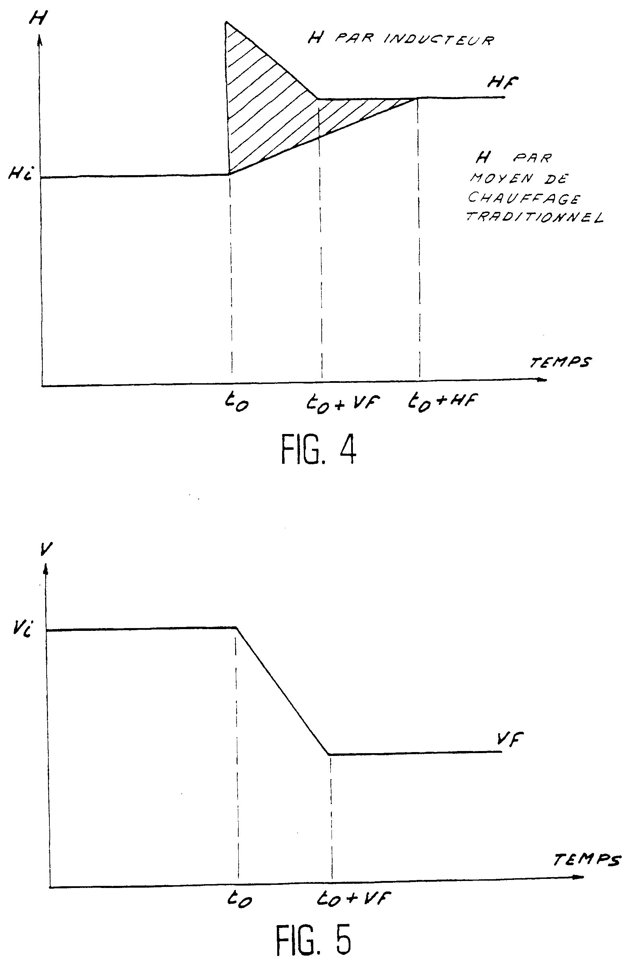

Le mode positif de fonctionnement est avantageusement explicité, pour une augmentation de section du produit à traiter qui entraîne une réduction de la vitesse de la bande de Vi à Vf, par l'étude des graphiques des figures quatre et cinq, en effet pour l'évolution de l'apport calorifique global (H) en fonction du temps (cf figure 4), porté respectivement en ordonnée et abscisse, on voit que l'apport énergétique dû à l'inducteur, zone hachurée, compense, pendant le laps de temps compris entre t0 représentant le changement de produit (autrement dit le passage de l'augmentation de section en entrée d'inducteur nécessitant un abaissement de la vitesse de la bande, cf figure 5) et t0+Vf qui figure l'instant où la vitesse de défilement du produit final est atteinte puis t0+Hf qui est l'instant où l'apport calorifique à la bande est atteinte par le moyen de chauffage traditionnel, l'inertie thermique du moyen de chauffage traditionnel entre deux états stables caractérisés par :
- une vitesse initiale Vi, pour un niveau énergétique Hi
- une vitesse finale Vf, pour un autre niveau énergétique différent du précédent Hf.

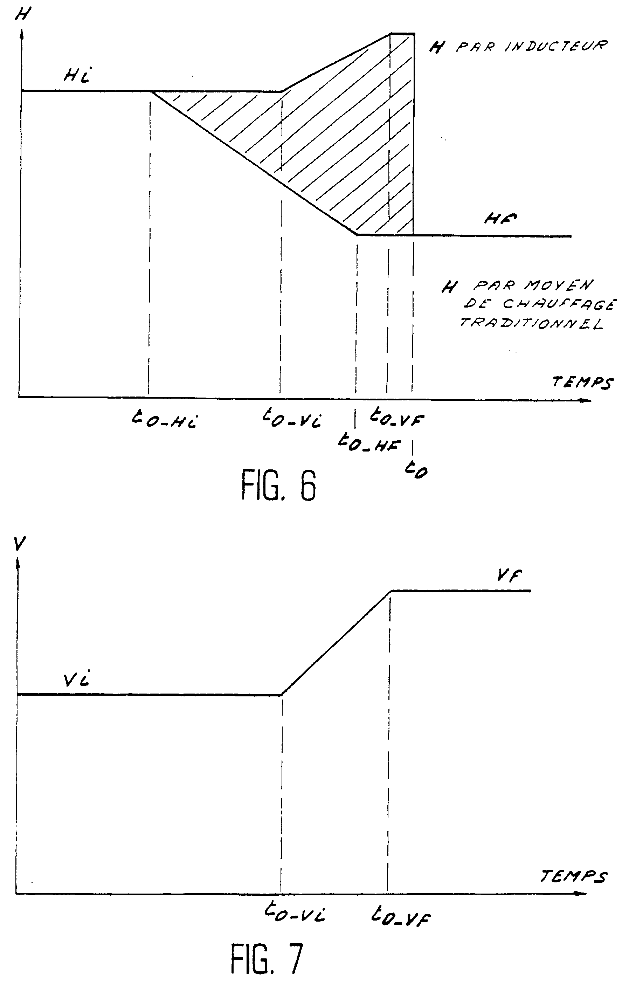

De même le mode de fonctionnement négatif est utilement étayé, pour une diminution de section du produit à traiter qui entraîne une augmentation de la vitesse de la bande de Vi à Vf, par les graphiques des figures six et sept, en effet la zone hachurée qui représente l'apport énergétique (cf figure 6), (H) en ordonnée, dû à l'inducteur au cours du temps en abscisse, compense à partir d'un instant partant de t0-Hi, dit de désindexation du four, à t0-Vi figurant l'instant où l'on dépasse la vitesse de défilement du produit final, s'étendant ensuite à t0-Vf instant où la vitesse de défilement du produit final est atteinte puis finalement au moment t0 qui est le changement de produit (passage de la diminution de section en entrée d'inducteur), l'inertie incontournable de la source de chauffage traditionnel qui oblige cependant à maintenir une quantité de chaleur suffisante (par l'inducteur) pendant le temps nécessaire à l'apparition du niveau énergétique (Hf) inférieur au précédent (Hi).

On recherche à minimiser, dans le temps, les conséquences sur le produit en réduisant le régime transitoire entre un état initial, correspondant à un régime thermique (Hi) stabilisé d'une source de chauffage traditionnel (une vitesse Vi, une température de bande Ti) et à un format de bande donné (une épaisseur Ei, une largeur Li, une émissivité Emi) et un état final correspondant à un autre régime thermique (Hf) stabilisé (une vitesse Vf, une température de bande Tf) et à un autre format de bande (une épaisseur Ef, une largeur Lf, une émissivité Emf).

Le mode de fonctionnement positif se caractérise de la manière suivante, en cas d'évènements prévisibles :
. l'utilisateur observe par un suivi de bande à l'entrée de l'induction que l'un des paramètres caractéristiques de la bande suivants :
. augmentation de la section du produit à traiter (E et/ou L)
. variation de l'émissivité du produit (Em)
. augmentation de la température en fin de chauffage du produit (T) va changer, ce qui sans la présence de l'inducteur, pourrait conduire à une réduction anticipée de la vitesse de passage de bande.

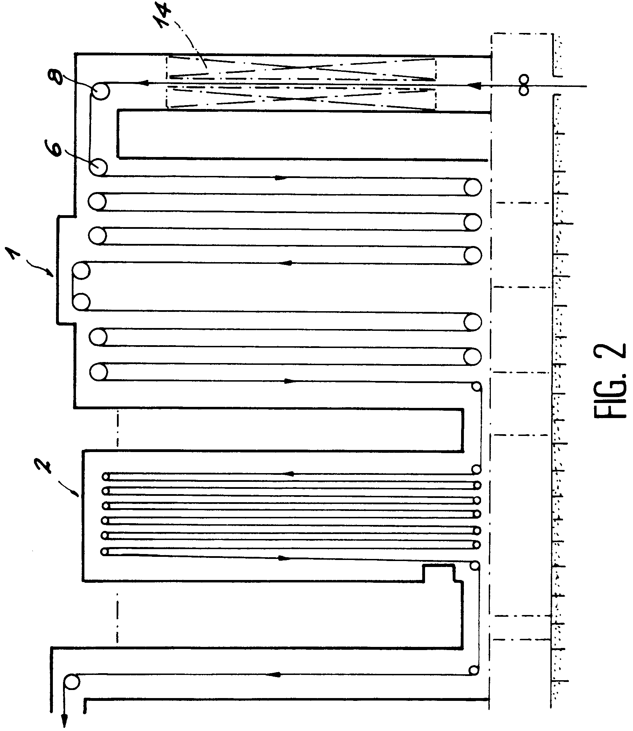

Pour une installation munie d'un dispositif d'induction placé en amont (cf. figure 2) de la section de chauffage, les actions sont les suivantes (cf.figure 4 et 5) :
. mise en action de l'inducteur 14 et augmentation de l'apport énergétique sans inertie thermique et sans réduction de la vitesse initiale Vi, entraînant immédiatement l'amenée à la température Tf correspondant à la température de sortie de bande et ce à la fin de la section de chauffage traditionnel,
. consigne d'augmentation de l'apport calorifique du moyen de chauffage traditionnel, qui entraîne :
. augmentation de l'apport énergétique de la source de chauffage traditionnel à son niveau final, compensée par une
. réduction progressive ou par palier de l'apport énergétique de l'inducteur,

Par ce mode de réaction, on peut, grâce au dispositif d'induction, éviter (en l'absence du dispositif d'induction):
- une souschauffe d'une partie de bande Bf (tête de bande) si l'on n'a pas anticipé une réduction de vitesse (de Vi à Vf) avant l'évènement,
- une mauvaise anticipation de réduction de vitesse conduisant à :
- une souschauffe d'une partie de produit Bf (tête de bande),
- une surchauffe d'une partie du produit Bi (queue de bande),
- une perte de production.

On étudie maintenant le régime transitoire d'un mode positif, mais caractérisé par un évènement imprévisible (augmentation de la vitesse sur consigne de l'opérateur consécutive à un évènement extérieur, marche automatique dégradée lors d'un évènement prévisible), l'action de l'inducteur est la suivante :
. il devient possible de compenser instantanément l'insuffisance et l'inertie du chauffage traditionnel qui se déclare au moment de la parution de l'évènement.

L'effet produit par cette variation d'apport énergétique inductif ne s'applique que sur la portion du produit traité comprise entre l'entrée du dispositif de chauffage traditionnel et la fin de la section de chauffage inductif.

Il est évident que la partie du produit comprise entre la sortie du chauffage inductif et la fin du chauffage traditionnel ne bénéficie pas du changement de niveau de puissance de chauffage.

C'est pourquoi (cf. figure 3) , le dispositif d'induction 14 est placé aussi près de la fin de section de chauffage traditionnel (ce qui correspond au deuxième mode de mise en oeuvre qu'on a vu ci-dessus).

L'amélioration est la suivante, dans un four traditionnel la durée d'un régime transitoire se situe entre 2 et 5 mn et souvent plus, la longueur de produit correspond à un temps compris entre 30 s et 1 mn, la présence d'un dispositif d'induction en amont du cheminement de la bande (premier mode du mise en oeuvre du procédé) constitue un avantage incontestable.

On étudie maintenant le deuxième mode de fonctionnement, dit négatif, et pour chacun des évènements prévisibles et imprévisibles.

Le mode négatif se caractérise de la manière suivante (évènements prévisibles, observations du suivi de bande à l'entrée de l'inducteur),
. diminution de la section du produit à traiter (E ou L),
. variation de l'émissivité de la bande (Em),
. diminution de la température en fin de chauffage (T).

Pour un mode négatif et pour l'un des paramètres prévisibles (cf. figure 2) préalablement décrits, les actions sont les suivantes (cf.figure 6 et 7) :
. avant la parution de l'évènement (passage de la réduction de section à l'entrée de l'inducteur), l'utilisateur augmente l'apport énergétique par sa mise en route afin de compenser :
. une diminution nécessaire du dispositif de chauffage traditionnel de sa valeur initiale à sa valeur finale, qui a lieu avant la parution de l'évènement, et ce en fonction de l'inertie thermique du chauffage traditionnel,
. une augmentation de la vitesse de traitement de Vi à Vf afin que la vitesse finale soit atteinte avant la parution de l'évènement.

A la parution de l'évènement, mise hors tension de l'inducteur et conséquemment disparition immédiate de son apport énergétique.

La présence du dispositif d'induction en amont de l'installation et en regard de cette situation de fonctionnement procure les avantages suivants :
. évite une surchauffe d'une partie du produit Bf (tête de bande) si l'on n'a pas anticipé correctement l'augmentation de vitesse V (de Vi à Vf) et (pour une mauvaise anticipation de l'augmentation de vitesse V) évite :
. une souschauffe d'une partie du produit (queue de bande du produit Bi),
. une perte de production si V < Vf.

On étudie maintenant un mode de fonctionnement négatif en cas d'évènements imprévisibles (cf. figure 3) :
. diminution de la vitesse sur consigne opérateur ou suite à un évènement extérieur,
. marche automatique dégradée.

Il devient possible de compenser immédiatement l'excès de chauffage qui se déclare au moment de la parution de l'évènement. Cette diminution est instantanée et s'exerce par la mise hors tension de l'inducteur.

Comme précédemment, l'effet produit par ces variations d'apport de chauffage inductif ne s'applique qu'à la portion de bande située entre l'entrée du moyen de chauffage traditionnel et la fin du chauffage inductif. Il est nécessaire d'installer le chauffage par induction aussi près que possible de la fin de la section de chauffage traditionnel.

Quels que soient les modes de mise en oeuvre du procédé, négatif, positif, et caractérisés par les évènements prévisibles ou imprévisibles, la puissance de chauffage inductif doit représenter une partie non négligeable de la capacité de chauffage totale installée.

En régime normal de fonctionnement, le chauffage sera effectué principalement à l'aide de la totalité de la puissance traditionnelle installée et d'une partie de la puissance inductive.

La lecture de la description qui précède montre que le procédé apporte une nouveauté dans l'emploi du chauffage combiné et/ou simultané par induction au chauffage traditionnel ; en effet, il permet d'augmenter la capacité, la flexibilité de l'installation existante.

Il répond partiellement ou totalement aux contraintes exigées pour une section considérée :
. temps de maintien à température, et temps de diffusion requis pour le traitement thermique de la bande,
. gradient de variation de vitesse donné et stable.

Il demeure bien entendu que la présente invention n'est pas limitée aux exemples de réalisation décrits et représentés ci-dessus, mais qu'elle en englobe toutes les variantes.

Ainsi, bien que l'exemple de réalisation décrit ci-dessus se réfère à un four vertical, il est évident que l'invention peut également à un four horizontal où la bande est transportée par des rouleaux également entraînés sans contituer des brins verticaux mais de simples chaînettes de très faibles amplitudes.

## Revendications

**1 -** Procédé de traitement thermique de bandes métalliques en continu, caractérisé en ce que la bande devant subir le traitement thermique, chemine au travers d'un four, isolé thermiquement et dans une atmosphère protectrice, constitué de sections de chauffage (1), de maintien (2), de refroidissement (3) ; ladite bande est guidée par une pluralité de rouleaux de renvoi (6, 6', 6", 7, 7', 7") situés dans les parties supérieures et inférieures desdites sections et conforme ainsi une pluralité de brins, et passent devant des moyens de refroidissement et de chauffage traditionnel, (généralement réalisé par une source de rayonnement ou à l'aide de flammes nues), et à induction (14), ces derniers sont, soit placés en amont, soit en aval, d'au moins une section de chauffage traditionnel (1), soit disposés de manière à diviser au moins une section de chauffage traditionnel en parties (1, 1') et sont utilisés de façon combinées et/ou simultanées avec les autres moyens de chauffage afin de compenser les variations des paramètres de traitement thermique.

**2 -** Procédé de traitement thermique selon la revendication 1, caractérisé en ce que l'on place un dispositif d'induction (14), en amont d'une section de chauffage traditionnel (1) et permet par l'augmentation instantanée de l'apport énergétique dû à l'induction, de compenser l'inertie du moyen de chauffage traditionnel lors d'une augmentation prévisible de format et de caractéristiques de la bande.

**3 -** Procédé de traitement thermique selon la revendication 1, caractérisé en ce que l'on place un dispositif de chauffage par induction (14) à l'intérieur d'une section de chauffage traditionnel (1, 1') afin de minimiser, soit les pertes de production, soit les pertes de bandes ne répondant pas aux critères de procédé, lors de la parution d'une augmentation imprévisible de format et de caractéristiques de la bande.

**4 -** Procédé de traitement thermique selon la revendication 1, caractérisé en ce que l'on place un dispositif de chauffage par induction (14), en amont d'une section de chauffage (1), pour maintenir avant la parution prévisible d'une diminution de format ou de caractéristiques de la bande, l'apport énergétique nécessaire à la bande initiale pendant le temps nécessaire à la mise en configuration adéquate de la section de chauffage traditionnel.

**5 -** Procédé de traitement thermique selon la revendication 1, caractérisé en ce que l'on utilise un dispositif de chauffage par induction (14), placé à l'intérieur d'une section de chauffage traditionnel (1, 1'), afin de diminuer instantanément l'apport énergétique lors de la parution imprévisible d'une diminution de format et de caractéristiques de la bande.

**6 -** Procédé de traitement thermique selon l'une quelconque des revendications précédentes, caractérisé en ce que l'action des dispositifs d'induction (14) se situe au droit du passage des brins constituant la bande.

**7 -** Procédé de traitement thermique selon l'une quelconque des revendications précédentes, caractérisé en ce que les dispositifs d'induction (14) sont, soit disposés en amont, soit en aval, d'une section de chauffage traditionnel (1), soit disposés aussi près que possible de la fin desdites sections (1, 1').

**8 -** Installation pour la mise en oeuvre du procédé selon l'une quelconque des revendications 1 à 7, caractérisé en ce que le dispositif permettant les variations des paramètres de traitement thermique est notamment installé dans un four de recuit de bande en continu et comprend :
. au moins une section de chauffage (1) traditionnel généralement réalisé par une source de rayonnement ou à l'aide de flammes nues, l'ensemble est muni d'un dispositif de chauffage par induction (14) placé en amont de cette dernière,
. au moins une section de maintien en température (2) permettant l'établissement des transformations cristallographiques de la bande,
. au moins une section de refroidissement (3) dans laquelle on assure par des moyens connus (fentes, orifices) un soufflage de gaz perpendiculairement au sens de défilement du produit,
. au moins une section de vieillissement (4) analogue à la section de maintien,
. au moins une section de refroidissement final (5), pouvant être réalisé par une aspersion de liquide sur la bande en défilement ;
toutes ces sections sont munies dans leurs parties inférieure et supérieure d'une pluralité de rouleaux de renvoi (6, 6', 6", 7, 7', 7") pour le guidage de la bande et d'une série de rouleaux (8, 8') de centrage de l'axe de la bande dans l'axe de la ligne, similaires aux précédents, lesdites sections sont reliées entre elles par des tunnels de liaison, l'ensemble est étanche et calorifugé (9, 10, 11, 12, 13) et maintenu sous une atmosphère protectrice.
